# EUROPEAN PATENT APPLICATION

(11) **EP 4 008 179 A1**
(43) Date of publication of application: **08.06.2022**
(21) Application number: 20000439.8
(22) Date of filing: 04.12.2020
(51) Int. Cl.: A01K 29/00, A01K 61/95

(54) **METHOD AND SYSTEM FOR DETERMINING BIOMASS OF AQUATIC ANIMALS**

(71) Applicant: Siemens Aktiengesellschaft, 80333 München (DE)
(72) Inventor: Tan, Alan Wei Min, 791432 Singapore (SG); Shrivastava, Harsh Vardhan, 328689 Singapore (SG); Basavaraj, Meghana, 787056 Singapore (SG); Reddy, Babu Krishna, 823615 Singapore (SG)
(74) Representative: Isarpatent

(57) **Abstract**

A method of determining biomass of at least one aquatic animal The method comprises receiving one or more images of the at least one aquatic animal (108) in an enclosed area (106) from one or more image acquisition devices (104). The method comprises extracting one or more features corresponding to the at least one aquatic animal from the received one or more images. The method comprises detecting at least one aquatic animal. The method comprises detecting a set of key points based on the determined features corresponding to the at least one aquatic animal using a first trained algorithm. Herein, the set of key points are detected on a boundary of the aquatic animal. The method comprises computing a longitudinal dimension of the at least one aquatic animal based on the detected set of key points. The method comprises determining a weight of the at least one aquatic animal based on the determined longitudinal dimension using a second trained machine learning model.

## Description

The present invention generally relates to aquaculture management systems and more specifically to a method and system for determining biomass of at least one aquatic animal.

Aquaculture is the production activity of breeding, cultivating, and harvesting aquatic animals and plants under artificial control. Aquaculture has modes of rough culture, intensive culture, high-density intensive culture, and the like. The rough culture is to put seedlings in medium and small natural waters and to culture aquatic products such as fish in lakes and reservoirs, shellfish in shallow seas and the like by completely relying on natural baits. Intensive culture is to culture aquatic products such as pond fish culture, net cage fish culture, fence culture and the like in a small water body by using bait casting and fertilizing methods. The high-density intensive culture adopts methods of flowing water, controlling temperature, increasing oxygen, and the like to carry out high-density culture in a small water body so as to obtain high yield, such as flowing water high-density fish culture, shrimp culture and the like. An operation of such activities is closely related to a biomass of the aquatic animals that are cultivated in a water body. Estimating the biomass of the fishes in an aquaculture set up, for example tank is an important task that can lead to the optimization of many critical operations as mentioned earlier.

Conventionally, a weight of the fishes is measured manually by weighing the fishes. However, there are no non-invasive or contactless methods available for automatically estimating biomass of the fishes. The process of manual weighing of the fishes is time consuming and requires huge effort to manually catch the fishes from the tank or a breeding area and then weigh the fishes. In particular, while measuring the biomass of fishes manually, a sample of fishes is sampled from tank and weighed. For example, in a tank of 7000 fishes maybe 100-150 fishes are sampled for measurement. This sampling leads to biased biomass and inaccurate estimation of distribution in the tank. Furthermore, the manual estimation of biomass of fishes decreases as throughput of the processes or operations in the aquaculture set-up.

Therefore, there is a need for a method and system that can determine biomass of the aquatic animals in the enclosed area using machine learning models, thereby accurately determining biomass of the aquatic animals in the enclosed area.

The object of the invention is to provide a method and a system for determining biomass of at least one aquatic animal in an enclosed area using machine learning models, thereby efficiently monitoring growth of the aquatic animals in the enclosed area.

In the following description, the solution according to the invention is described with respect to the claimed system as well as with respect to the claimed method. Features, advantages or alternative embodiments herein can be assigned to the other claimed objects and vice versa. In other words, claims for the system can be improved with features described or claimed in the context of the method. In this case, the functional features of the method are embodied by objective units of the system.

The object of the invention is to provide a method of determining biomass of at least one aquatic animal. The method comprises receiving one or more images of the at least one aquatic animal in an enclosed area from one or more image acquisition devices. The enclosed area may be a tank, aquarium, reservoir, pond, or any indoor or outdoor closed area or container filled with fresh water or salt water and is capable of sustaining aquatic life. The method comprises extracting one or more features corresponding to the at least one aquatic animal from the received one or more images. The method comprises detecting a presence of the at least one aquatic animal based on the extracted one or more features. The method comprises detecting a set of key points based on the determined features corresponding to the at least one aquatic animal using a first trained machine leaning algorithm. Herein, the set of key points are detected on a boundary of the aquatic animal. The method comprises computing a longitudinal dimension of the at least one aquatic animal based on the detected set of key points. The method comprises determining a weight of the at least one aquatic animal based on the determined longitudinal dimension using a second trained machine learning model.

The method further comprises synchronously capturing the one or more images of the at least one aquatic animal using the one or more image acquisition devices.

The method further comprises determining a type of the at least one aquatic animal from the one or more extracted features corresponding to the at least one aquatic animal using a second trained machine learning algorithm.

The method further comprises monitoring a condition of the at least one aquatic animal in the enclosed area based on the determined weight of the at least one aquatic animal.

The method further comprises determining one or more parameters affecting the condition of the at least one aquatic animal in the enclosed area.

The method further comprises determining an amount of feed to be provided to the at least one aquatic animal based on the one or more parameters affecting the condition of the at least one aquatic animal. Further, the method comprises configuring the amount of feed to be provided to the at least one aquatic animal in a feed control device.

The method further comprises determining an amount of dissolved oxygen to be provided to the at least one aquatic animal based on the one or more parameters affecting the condition of the at least one aquatic animal. The method comprises determining an amount of currently dissolved oxygen in water filled in the enclosed area using one or more sensors installed in the enclosed area. The method comprises controlling an amount of dissolved oxygen in water based on the determined amount of oxygen to be provided to the at least one aquatic animal and the determined amount of oxygen currently dissolved in the water.

The method further comprises receiving a request to provide a quantity of a given type of aquatic animal from the enclosed area. The method comprises determining one or more aquatic animals belonging to the given type using the second machine leaning algorithm. The method comprises determining a group of aquatic animals from the determined one or more aquatic animals based on the determined weight of each of the one or more aquatic animals. Herein, collective weight of the group of aquatic animals is equal to the quantity specified in the received request. The method comprises capturing the group of aquatic animals using a radio frequency identification sensor associated with each of the aquatic animals.

The method of detecting the set of key points comprises detecting the set of key points in each of the one or more images of the at least one aquatic animal in such a manner that the key points lie on a same plane.

The method of detecting the set of key points on each of the received images comprises determining a pair of corresponding images pertaining to each of the at least one aquatic animal. Herein, the pair of corresponding images overlaps with each other.

The method of computing the longitudinal dimension of the at least one aquatic animal based on the detected set of key points comprises transforming the detected set of key points to corresponding three-dimensional co-ordinates. The method comprises identifying a first three-dimensional co-ordinate corresponding to a front edge of the at least one aquatic animal. The method comprises identifying a second three-dimensional co-ordinate corresponding to a rear edge of the at least one aquatic animal. The method comprises calculating a distance between the first three-dimensional co-ordinate and the second three-dimensional co-ordinate. The method comprises computing the longitudinal dimension of the at least one aquatic animal based on the calculated distance.

The invention relates in one aspect to an apparatus for determining biomass of the at least one aquatic animal. The apparatus comprises one or more processing units, and a memory communicatively coupled to the one or more processing units. The memory comprising an aquaculture management module configured to perform the aforementioned method steps.

The invention relates in one aspect to a system for determining biomass of at least one aquatic animal. The system comprises one or more image acquisition devices configured to capture one or more images of the at least one aquatic animal in an enclosed area. Further, the system comprises one or more processing units, and a memory communicatively coupled to the one or more processing units. The memory comprises a weight determination module configured to perform the aforementioned method steps.

The invention relates in one aspect to a system for determining biomass of at least one aquatic animal. The system comprises one or more servers remotely located from an enclosed area. The system comprises one or more image acquisition devices communicatively coupled to the one or more servers. Further, the system comprises one or more user devices communicatively coupled to the one or more servers. Herein, the one or more servers comprise computer readable instructions which when executed by the one or more servers cause the one or more servers to perform the aforementioned method steps.

The invention relates in one aspect to a computer program product comprising machine readable instructions, that when executed by a processing unit, cause the processing unit to perform the aforementioned method steps.

The invention relates in one aspect to a computer readable medium on which program code sections of a computer program are saved, the program code sections being loadable into and/or executable in a system to make the system execute the aforementioned method steps when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
- FIG 1: is a schematic representation of an aquaculture set-up, in accordance with an embodiment of the present invention;
- FIG 2: illustrates a block diagram of a cloud platform for implementing one or more embodiments of the present invention, in accordance with an embodiment of the present invention;
- FIG 3: illustrates a flowchart depicting steps of a method of determining biomass of at least one aquatic animal, in accordance with an embodiment of the present invention;
- FIG 4: illustrates a schematic representation of detection of set of key points on an image of the at least one aquatic animal, in accordance with an embodiment of the present invention;
- FIG 5: illustrates a schematic representation of the first machine learning algorithm for classifying the at least one aquatic animal, in accordance with an embodiment of the present invention; and
- FIG 6: illustrates a flowchart depicting steps of a method of computing the longitudinal dimension of the at least one aquatic animal based on the detected set of key points, in accordance with an embodiment of the present invention;
- FIG 7: illustrates a flowchart depicting steps of a method of monitoring a condition of the at least one aquatic animal in the enclosed area based on the determined weight of the at least one aquatic animal, in accordance with an embodiment of the present disclosure;
- FIG 8: illustrates a flowchart depicting steps of a method of monitoring a condition of the at least one aquatic animal in the enclosed area based on the determined weight of the at least one aquatic animal, in accordance with an embodiment of the present disclosure; and
- FIG 9: illustrates a flowchart depicting steps of a method of monitoring a condition of the at least one aquatic animal in the enclosed area based on the determined weight of the at least one aquatic animal, in accordance with an embodiment of the present disclosure.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

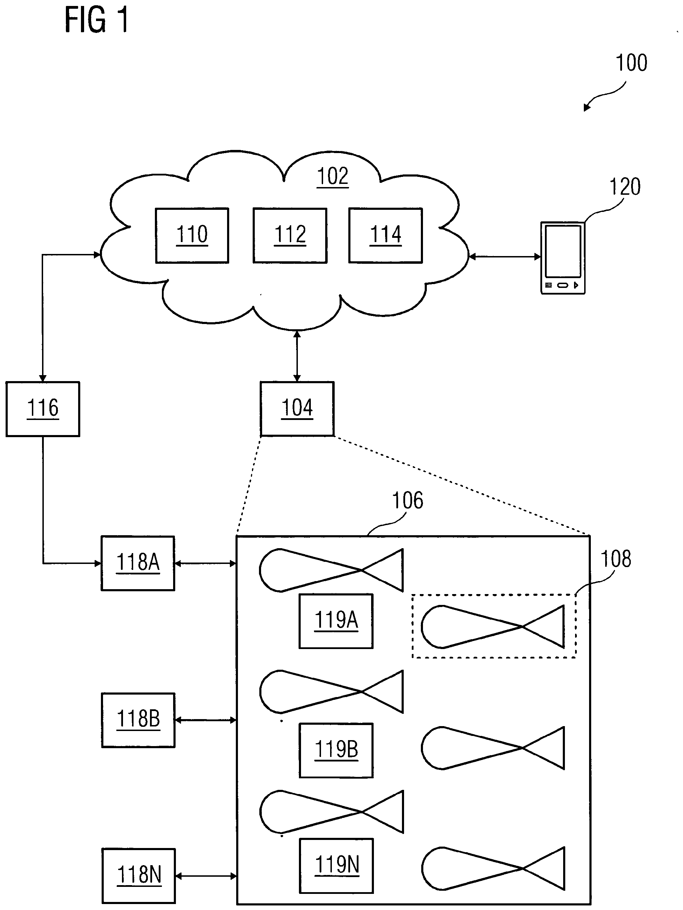

FIG 1 is a schematic representation of an aquaculture set-up 100, in accordance with an embodiment of the present invention. The aquaculture set-up 100 comprises a cloud platform 102, one or more image acquisition devices 104 connected to the cloud platform 102 and positioned in and/or above an enclosed area 106 having at least one aquatic animal 108, a controller 116 communicatively coupled to the cloud platform 102, one or more life support devices 118A-N communicatively coupled to the controller 116, and a user device 120 associated with a user of managing activities in the enclosed area 106. The enclosed area 106 may be a tank, aquarium, reservoir, pond, or any indoor or outdoor closed area or container filled with fresh water or salt water and is capable of sustaining aquatic life. The enclosed area 106 may be of any shape and/or size or may be manufactured from any material including but not limited to glass, plastics, concrete and so forth. The enclosed area 106 may be capable of sustaining aquatic life of a variety of co-existing species of aquatic flora and fauna. The at least one aquatic animal may include any form of life that lives predominantly in different water forms, such as seas, oceans, rivers, lakes, ponds, etc. In an example, the aquatic animals are edible animals that are farmed and/or bred in the enclosed area 106 for consumption purposes/ Examples of aquatic animals include fish, primitive sharks, skates, rays, sawfish, sturgeons, lampreys, crustaceans such as lobsters, crabs, shrimps, prawns, and crayfish, mollusks including clams, oysters, cockles, mussels, periwinkles, whelks, snails, abalones, scallops, and limpets, the cephalopod mollusks-squids, octopuses, cuttlefish, edible jellyfish; sea turtles; frogs; and so forth. In an example, commercially important fishes are species of salmon, herring, codfish, flatfish (flounder, sole, halibut, turbot), redfish (ocean perch), jack mackerel, tuna, mackerel, and sardine. The aquatic animals 108 may also include species of freshwater fish such as carp, eel, trout, whitefish, pike, pike perch, catfish and so forth.

The one or more acquisition devices 104 are configured to capture images of the aquatic animals 108 in the enclosed area 106. Throughout the present invention, the term "image acquisition device" 104 as used herein refers to an electronic device and/or an optical device configured to acquire images of the aquatic animals 108 in the enclosed area 106. Herein, the image acquisition devices 104 refer to scanning devices that produce digital data in the form of a three-dimensional image or a two-dimensional image representing an object or a scene in a real-world environment, such as images of aquatic animals in accordance with present embodiments. Typically, the image acquisition devices 104 refer to a collection of one or more programmable and/or non-programmable components that are configured to capture data describing one or more features of a real-world object, for example, one or more features of the aquatic animals for determining a longitudinal and/or lateral dimension of the captured aquatic animals.

In an example, the image acquisition device 104 is any one of: a camera, a stereo camera, a rotatable camera, an infrared camera and an optical camera. In an embodiment, the image acquisition devices 104 may be arranged inside the enclosed area 106 or outside the enclosed area 106 based on a type of the camera 104. In one or more examples, the image acquisition devices 104 may be arranged in a stereo-set up and configured to acquire multiple images of the aquatic animal 108 at the same time. The image acquisition device 104 is in communication with the cloud platform 102. The image acquisition device 104 is configured to capture images of the aquatic animals 108 in the enclosed area 106 and transmit the images to the cloud platform 102 for further processing.

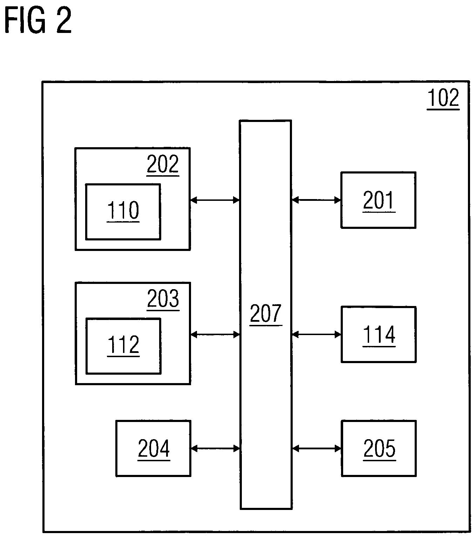

The cloud platform 102 can be a cloud infrastructure capable of providing cloud-based services such as data storage services, data processing and analytics services, data visualization services, etc. based on the captured images. The cloud platform 102 can be part of public cloud or a private cloud. The cloud platform 102 may enable data scientists/software vendors to provide software applications/firmware as a service, thereby eliminating a need for software maintenance, upgrading, and backup by the users. The software application can be full application, or software patch. The cloud platform 102 is further illustrated in greater detail in FIG 2.

In an exemplary implementation, cloud platform 102 comprises an aquaculture management module 110 which is configured determine biomass of the at least one aquatic animal, a database 112 for storing information related to various species of aquatic animals, a relationship between length and weight of the aquatic animals, training dataset pertaining to machine learning models and so forth, and a network interface 114 for enabling communication between the cloud platform 102 and other components in the aquaculture set-up 100. The aquaculture management module 110 is configured to receive one or more images of the at least one aquatic animal 108 in an enclosed area 106 from one or more image acquisition devices 104. Further, the aquaculture management module 110 is configured to extract one or more features corresponding to the at least one aquatic animal 108 from the received one or more images. Further, aquaculture management module 110 is configured to detect a set of key points based on the determined features corresponding to the at least one aquatic animal 108. Herein, the set of key points are detected on a boundary of the aquatic animal 108. Further, the aquaculture management module 110 is configured to compute a longitudinal dimension of the at least one aquatic animal 108 based on the detected set of key points. Further, the aquaculture management module 110 is configured to determine a weight of the at least one aquatic animal based on the determined longitudinal dimension using a second trained machine learning model. According to an embodiment, the cloud platform 102 is further configured to determine a condition of the aquatic animal 108 and intelligently control a number of parameters of one or more life support devices 118A-N associated with the enclosed area 106 using a controller 116.

The life support devices 118A-N may include aerators, feed feeders, water temperature regulators, water inlet and outlet electromagnetic valves, lights. The aerators, the feed feeders, the water temperature regulators and the water inlet and outlet electromagnetic valves, and the lights are all communicatively coupled to the controller 116. Notably, the life support devices 118A-N are also in communication with one or more sensors 119A-N arranged in the enclosed area 106. Examples of one or more sensors 119A-N include, but are not limited to, a dissolved oxygen monitoring sensor, an ammonia nitrogen content monitoring sensor, a pH value monitoring sensor, a nitrite monitoring sensor, and a water temperature monitoring sensor. The dissolved oxygen monitoring sensor, the ammonia nitrogen content monitoring sensor, the pH value monitoring sensor, the nitrite monitoring sensor, and the water temperature monitoring sensor are configured to acquire data from the enclosed area 106 and transmit it to the cloud platform 102 for further processing. The controller 116 may include electrical controllers, automated controllers, switches, PLC controllers that may be configured to intelligently control the life support devices 118A-N based on data from the one or more sensors 119A-N. In an embodiment, electrical signals are generated corresponding to the obtained values from the one or more sensors 119A-N that may be fed to life support devices 118A-N to maintain an optimal growth and condition of the aquatic animals 108 in the enclosed area 106. The user device 120 may be a handheld device, a desktop, a computer, a laptop, a palmtop, or a wearable device configured to display real-time operations in the enclosed aquaculture set-up 100. Further, the user device 120 is communicatively coupled to the cloud platform 102 and is capable of receiving processed data and live stream from the enclosed area 106 depicting a condition of the aquatic animals 108. In one or more embodiments, the user device 120 is also capable of remotely controlling one or more operations in the enclosed area 106.

FIG. 2 illustrates a block diagram of the cloud platform 102 for implementing one or more embodiments of the present invention. The cloud platform 102 comprises a processing unit 201, a memory 202, a storage unit 203, a network interface 114, a standard interface or bus 207. The cloud platform 102 may be an exemplary embodiment of a system. The system 102 can be a (personal) computer, a workstation, a virtual machine running on host hardware, a microcontroller, or an integrated circuit. As an alternative, the system 102 can be a real or a virtual group of computers (the technical term for a real group of computers is "cluster", the technical term for a virtual group of computers is "cloud").

The processing unit 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 201 may also include embedded controllers, such as generic or programmable logic devices or arrays, application specific integrated circuits, single-chip computers, and the like. In general, a processing unit 201 can comprise hardware elements and software elements. The processing unit 201 can be configured for multithreading, i.e. the processing unit 201 can host different calculation processes at the same time, executing the either in parallel or switching between active and passive calculation processes.

The memory 202 may be volatile memory and non-volatile memory. The memory 202 may be coupled for communication with the processing unit 201. The processing unit 201 may execute instructions and/or code stored in the memory 202. A variety of computer-readable storage media may be stored in and accessed from the memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes the aquaculture management module 110 stored in the form of machine-readable instructions on any of the above-mentioned storage media and may be in communication to and executed by processing unit 201. When executed by the processing unit 201, the aquaculture management module 110 causes the processing unit 201 to determine biomass of the aquatic animals in the enclosed area 106. The aquaculture management module 110 may further cause the processing unit 201 to monitor a condition of the aquatic animals 108 in the enclosed area 106 and control life support systems 118A-N to maintain an optimal growth of the aquatic animals 108. Method steps executed by the processing unit 201 to achieve the abovementioned functionality are elaborated upon in detail later in the description.

The storage unit 203 may be a non-transitory storage medium which stores the database 112. The database 112 may store training datasets for training the first machine learning algorithm and the second machine learning algorithm. Furthermore, the database 112 may store data from the one or more sensors 119A-N installed in the enclosed area 106. The cloud platform 102 may further comprise an input unit 204 and an output unit 205. The input unit 204 may include input devices such as keypad, touch-sensitive display, camera (such as a camera receiving gesture-based inputs), etc. capable of receiving input signals such as requests for controlling life-support devices, request for analyzing data from the one or more sensors 119A-N and so forth. The output unit 205 may be a device with a graphical user interface displaying a condition of the aquatic animals 108, displaying a growth curve of each of the aquatic animals, generating alerts in case of any anomalies in the condition of the aquatic animals 108, and the like. The bus 207 acts as interconnect between the processing unit 201, the memory 202, the storage unit 203, the input unit 204, and the output unit 205.

Those of ordinary skill in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

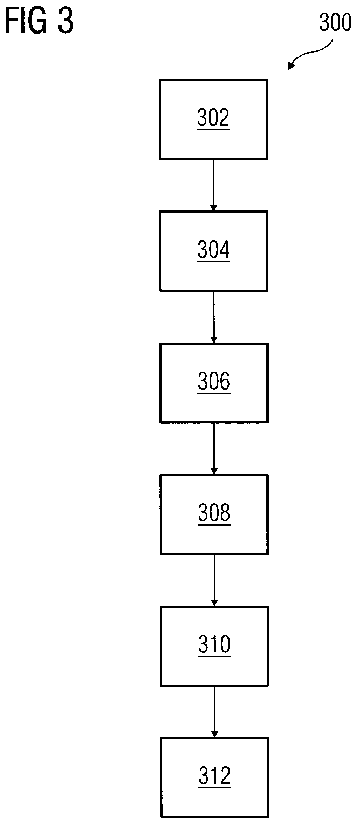

FIG. 3 illustrates a flowchart depicting steps of a method 300 of determining biomass of at least one aquatic animal 108, in accordance with an embodiment of the present invention. At step 302, one or more images of the at least one aquatic animal 108 in an enclosed area 106 are received from one or more image acquisition devices 104. According to an embodiment, the method further comprises synchronously capturing the one or more images of the at least one aquatic animal using the one or more image acquisition devices 104.

The one or more image acquisition devices 104 are arranged in a stereo set-up in a manner that each of the image acquisition devices 104 is configured to capture multiple images of the at least one aquatic animal 108 at the same instant of time. In an exemplary implementation, a pair of cameras 104 is arranged in a horizontally separated stereo configuration to obtain images of the aquatic animal 108. In an example, two images may be captured from the stereo cameras, say a right image and a left image. The captured images are rectified to remove any distortion in the images. The rectification of the one or more images is performed using calibration parameters. Furthermore, prior to capturing images of the aquatic animal 108, the cameras 104 are calibrated for high accuracy. In particular, images of calibration patterns in various positions and angles captured by the cameras to be calibrated are used to calculate intrinsic and extrinsic camera parameters. In an example, the intrinsic and extrinsic parameters are calculated using checkboard patterns. The intrinsic parameters, also known as internal parameters, are the parameters intrinsic to the camera itself, such as the focal length and lens distortion. The extrinsic parameters, also known as external parameters or camera pose, are the parameters used to describe the transformation between the camera and its external world. The calculated intrinsic and extrinsic camera parameters are used for calibrating the cameras and rectification of the one or more images captures by the image acquisition devices 104. The image rectification is performed using image processing techniques known in the art, for example, by removing distortions and aligning the images from both cameras 104.

At step 304, one or more features corresponding to the at least one aquatic animal 108 are extracted from the received one or more images. The one or more features may refer to distinctive characteristics of the aquatic animals 108 such as shape of the aquatic animal 108, size of the aquatic animal 108, boundary and edges of the aquatic animal 108, intensity values of the aquatic animal 108 and so forth. In a specific example, the aquatic animal 108 is a fish of a particular species. The one or more features may include but are not limited to, a head of the fish, a tail of the fish, one or more fins of the fish, scale patterns of the fish, color of the fish and so forth. Such one or more features can be extracted from the images of the aquatic animal 108 using image processing techniques. At step 306, presence of the at least one aquatic animal 108 is detected based on the extracted one or more features. The at least one aquatic animal 108 is detected and represented in bounding boxes. In an example, each of the at least one aquatic animal 108 is detected and is assigned a bounding box in each of the images (say the right image and the left image from the stereo camera) for further processing. In an embodiment, a type of the at least one aquatic animal 108 is determined from the one or more extracted features corresponding to the at least one aquatic animal 108 using a second trained machine learning algorithm. The one or more features extracted from the images are inputted to an input node of the second machine learning model. The machine learning model is trained to identify a type of the aquatic animal 108 based on the extracted one or more features of the aquatic animal 108. Herein, type of the aquatic animal may refer to a species of the aquatic animal. Further, a class label may be outputted at the output node of the second machine learning model. The class label indicates the type of species belonging to the aquatic animal 108. The second machine learning model is explained in detail later in the description.

At step 308, a set of key points based on the determined features corresponding to the at least one aquatic animal 108 is detected using the first trained machine learning model. The set of key points are detected on a boundary of the aquatic animal. The first trained machine learning model is configured to precisely determine the location of key points on the boundary of the aquatic animal 108. In one or more embodiments, the set of key points may also be detected on a body of the aquatic animal 108. The set of key points are detected to determine a length and corresponding weight of the aquatic animal 108. According to an embodiment, the set of key points in each of the one or more images of the at least one aquatic animal 108 are detected in such a manner that the key points lie on a same plane. Furthermore, once the set of key points are detected, it is determined if the key points lie on the same plane. If the key points do not lie on the same plane, then the set of key points are discarded and the process of detecting the set of points is repeated. If the set of key points lie on the same plane, then the key points are considered for weight determination. Notably, the detected set of key points is co-planar, thereby ensuring an accurate measurement of the length of the aquatic animal 108. It will be appreciated that a co-planarity of the detected set of key points ensures that the length determination of the aquatic animal 108 is not compromised by a twisting/twirling motion of aquatic animal 108.

According to an embodiment, detecting the set of key points on each of the received images comprises determining a pair of corresponding images pertaining to each of the at least one aquatic animal (108). Herein, the pair of corresponding images pertains to the same aquatic animal 108 and the pair of the corresponding images overlaps with each other. In particular, the bounding boxes of the right image from the stereo camera may be mapped with bounding boxes of the left image from the stereo camera to find corresponding pair of images of the aquatic animal 108. The overlap of the pair of images with each other will ensure that only the corresponding images of the aquatic animal 108 are considered for further processing. The correspondence between two images is insured for high accuracy. Further, a set of key points is detected on a first image from the first camera and a second set of key points is detected on a second image from the second camera. The first image and second image are overlapped with one to determine if the first image corresponds to the second image. In a case when the first image does not overlap with the second image, then the set of key points are discarded. In a case when the first image overlaps with the second image, the set of key points are considered for further processing. In particular, the bounding boxes of the

In a case, when the first set of key points are accurately aligned with the second set of key points, particular pair of first set of key points and the second set of key points are considered for further processing. In a case, when first set of key points are not accurately aligned with the second set of key points, particular pair of first set of key points and the second set of key points are discarded, and a new set of key points are determined for determining the biomass of the aquatic animal 108.

At step 310, a longitudinal dimension of the at least one aquatic animal 108 is computed based on the detected set of key points. The longitudinal dimension of the aquatic animal 108 is a length of the aquatic animal 108 determined along a longitudinal axis of the aquatic animal 108. In order to compute the longitudinal dimension (sometimes referred to as length hereinafter) of the aquatic animal 108, the detected set of key points are transformed to three-dimensional co-ordinates. Subsequently, length is computed from the three-dimensional co-ordinates using co-ordinate geometry. The method of computing the longitudinal dimension of the aquatic animal 108 is explained in greater detail later in the description.

At step 312, a weight of the at least one aquatic animal is determined based on the determined longitudinal dimension using a second trained machine learning model. The term "machine learning models" as used in "second trained machine learning models" refers to any algorithm that can learn a model or a pattern based on existing information or knowledge, and predict or estimate output using input of new information or knowledge. Herein, the second machine learning model infers to a value prediction model given a set of training data. In general, each individual sample of the training data is a pair containing a dataset (herein, length of a specific type of aquatic animal) and a desired output value or dataset (herein, a weight value corresponding to a length of the aquatic animal). The machine learning model analyzes the training data and produces a predictor function. The predictor function, once derived through training, is capable of reasonably predicting or estimating the correct output value or dataset i.e. an accurate value of the weight of the aquatic animal 108. Furthermore, the first machine learning model is trained using a large number of training dataset of relationship between lengths and weights of various species of aquatic animal 108.

In an embodiment, the second trained machine learning model is a regression model capable of computing the weight of the aquatic animal 108 from the computed length of the aquatic animal 108. The regression model may be linear regression model or a non-linear regression model. A relationship can be defined between two or more variables and can be expressed by a mathematical equation. Often a relationship is defined, in part, by one or more constants and/or one or more variables. A relationship in two dimensions can be generated for one or more samples, in certain embodiments, and a variable probative of error, or possibly probative of error, can be selected for one or more of the dimensions. Such a relationship between lengths and weights of the aquatic animal is generated by training the regression model with the training dataset. The different regression models include but are not limited to linear regression model, simple regression model, ordinary least squares regression model, logistic regression model, multinomial logit model, Poisson model, multivariate response regression model, nonlinear regression model, nonparametric model, robust model, quantile model, isotonic model, and errors-in-variables model. At an input node of the second trained machine learning model, the computed longitudinal dimension of each of the aquatic animals is inputted. A relationship is determined between the length and weight of the given aquatic animal 108. Further, a weight value corresponding to the length of the aquatic animal is determined at an output node of the trained second machine learning model based on the determined relationship.

According to an embodiment, the method further comprises monitoring a condition of the at least one aquatic animal 108 in the enclosed area 106 based on the determined weight of the at least one aquatic animal 108. The condition of the aquatic animal 108 refers to an optimal growth, health and survival of the aquatic animal 108 in the enclosed area 106. Notably, the condition of the aquatic animal 108 is monitored with respect to the life support devices 118A-N and the one or more sensors 119A-N installed in the enclosed area 106. The life support devices 1108A-N may include aerators, feed feeders, water temperature regulators, water inlet and outlet electromagnetic valves, lights, and the aerators, the feed feeders, the water temperature regulators communicatively coupled to the controller 116. Notably, the life support devices 118A-N are also in communication with one or more sensors 119A-N arranged in the enclosed area 106. Examples of one or more sensors 119A-N include, but are not limited to, a dissolved oxygen monitoring sensor, an ammonia nitrogen content monitoring sensor, a pH value monitoring sensor, a nitrite monitoring sensor, and a water temperature monitoring sensor. The one or more sensors 119A-N monitor the condition of the aquatic animals 108 in real-time and data from the sensors 119A-N is processed by the aquaculture management module 110 to control an operation of the life support devices 118A-N via the controller 116. In an embodiment one or more parameters affecting the condition of the at least one aquatic animal in the enclosed area are determined. The one or more parameters determined based on the data from the one or more sensors 119A-N in the enclosed area 106. The one or more parameters may include, but are not limited to, amount of dissolved oxygen in water filled in the enclosed area 106, amount of ammonia nitrogen content, a pH value of water filled in the enclosed area 106, a nitrite content in water filled in the enclosed area 106, and a temperature of water filled in the enclosed area 106.

In an embodiment, determining a growth relationship between the longitudinal dimension of the aquatic animal 108 and the determined weight aquatic animal 108 is determined for a period of time. Further, the determined growth relationship is compared with an optimal growth relationship for a type of aquatic animal. The optimal growth relationship may refer to a standard relationship that exists between the longitudinal dimension of the aquatic animal 108 and the determined weight of the aquatic animal 108 for a healthy aquatic animal 108. Further, it is determined if the growth of the at least one aquatic animal is under normal criteria based on the comparison. In a case, when the growth relationship is not under normal criteria, then an alert may be generated on the user device 120 to notify the user of the abnormalities in the growth pattern of the aquatic animal 108.

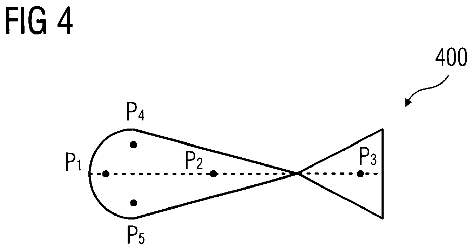

FIG 4 illustrates a schematic representation of detection of set of key points on an image 400 of the at least one aquatic animal, in accordance with an embodiment of the present invention. The set of key points include 5 key points namely P1, P2, P3, P4 and P5 that are detected on the image 400 of the aquatic animal 108. Herein, the key points P1, P2, P3, P4 and P5 are detected in such a manner that the key points lie on a same plane. Furthermore, the key points P1, P2, P3, P4 and P5 are detected in such a manner that the key points corresponding to each side of the aquatic animal 108 are aligned with each other.

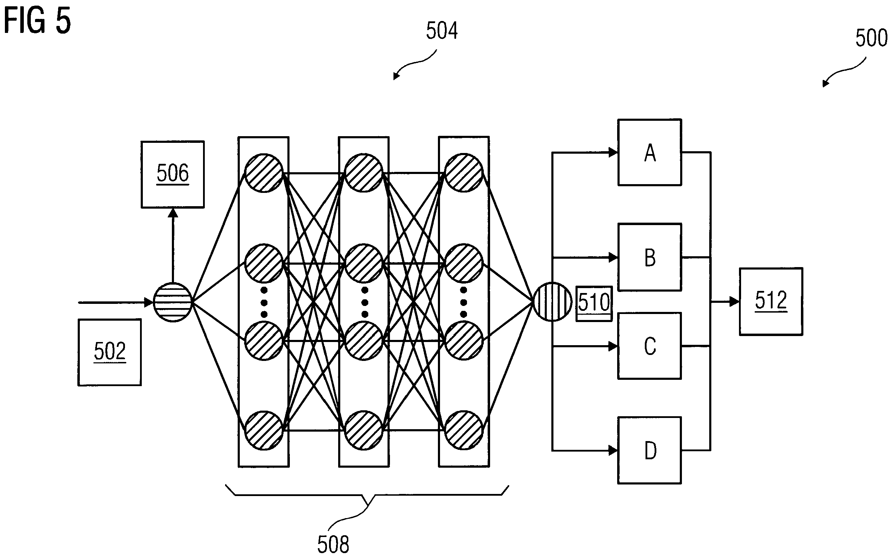

FIG 5 illustrates a schematic representation of a flowchart 500 depicting classification of the at least one aquatic animal 108 using the second trained machine learning model 504, in accordance with an embodiment of the present invention. The term "machine learning model" as used in "second trained machine learning model" 504 refers to any algorithm that can learn a model or a pattern based on existing information or knowledge, and predict or estimate output using input of new information or knowledge. Herein, the second machine learning model 504 infers to a value prediction model given a set of training data. In general, each individual sample of the training data is a pair containing a dataset (herein, one or more images or imaging data of different types or species of aquatic animal 108) and a desired output value or dataset (herein, a class or species of the aquatic animal 108). The second machine learning model 504 analyzes the training data and produces a classification function. The classification function, once derived through training, is capable of reasonably predicting or estimating the correct output value or dataset i.e. a class label corresponding to the aquatic animal 108. Furthermore, the second machine learning model 504 is trained using a large number of training dataset of various species of aquatic animal 108.

Notably, the one or more images of the aquatic animals 108 are classified into predefined classes using the second trained machine learning model 504. The image classification of the aquatic animal 108 is the task of taking an input image of the aquatic animal 108 and outputting a class or species of the aquatic animal 108. This is achieved using learning feature hierarchies, with features from higher levels of a hierarchy formed by composition of lower lever features. For example, a feature may be certain visible characteristics of the aquatic animal 108. Examples of low level features are a color, a texture, an edge and a curve associated with the aquatic animal 108. Examples of high level features are a shape and size of a front portion of the aquatic animal 108 for example the head of the fish, a shape and size of the rear portion of the aquatic animal 108, for example, tail of the fish, fins of the aquatic animal 108, tentacles of the aquatic animal 108 and so forth. It will be appreciated that the second machine learning model 500 is capable of automatically learning features at multiple levels of abstraction allows a system to learn complex functions mapping an input image of the aquatic animal 108 to an output classification directly from a received image.

In an embodiment, the second trained machine learning model 504 is a deep neural network model which includes an input layer 506, hidden layers 508, and output layer 510. Each of the layers 506-510 includes one or more nodes. The feature data 502 (or more features of the aquatic animal 108) is passed through input layer 506, hidden layers 508 and a class label is outputted at the output layer 510. The class labels 'A', 'B', 'C' and 'D' are defined class labels for which the second machine learning model is trained. In an example, the class labels correspond to different species of fishes in the enclosed area 106. For example, the class label 'A' corresponds to a tuna, class label 'B' corresponds to a catfish, class label 'C' corresponds to a barramundi, and class label 'D' corresponds to a salmon. It will be appreciated that the second machine learning model 504 is trained to output classification which is then used as an input function to a weight determination module 512 that determine weight of the aquatic animal 108 based on the classification obtained. Furthermore, the set of key points are also detected based on the output classification of the images of the aquatic animal 108.

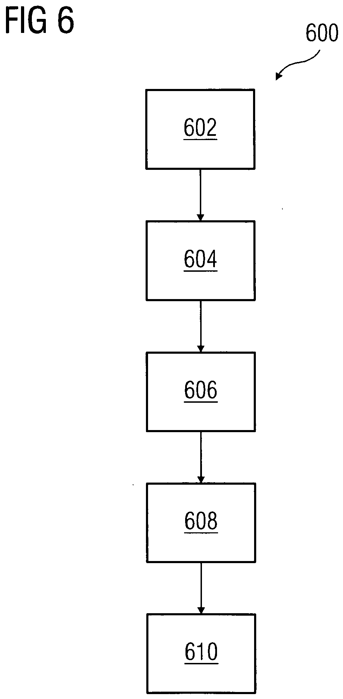

FIG 6 illustrates a flowchart depicting steps of a method 600 of computing the longitudinal dimension of the at least one aquatic animal 108 based on the detected set of key points, in accordance with an embodiment of the present invention. At step 602, the detected set of key points are transformed to corresponding three-dimensional co-ordinates. The set of key points are determined in a two dimensional space and therefore the key points are transformed to a three-dimensional space, thereby accurately determining the length of the aquatic animal 108 in three-dimensional space. The transformation may be performed using disparity estimation. Herein, stereo triangulation is used to obtain the real-world three-dimensional co-ordinates of the set of key points. This methodology requires the estimation of the disparity for each key point. Disparity may be defined as a value that describes the difference in position (in image coordinates) of a point (e.g. the head of a fish) between the left and right camera image. Furthermore, the three-dimensional co-ordinates corresponding to each key point is determined using disparity and intrinsic and extrinsic parameters of the image acquisition device 104. At step 604, a first three-dimensional co-ordinate corresponding to a front edge of the at least one aquatic animal 108 is identified. The first three-dimensional co-ordinate may be identified by estimating a proximity of each of the three-dimensional co-ordinates with a front edge of the aquatic animal 108. In an example, the front edge corresponds to a head of the fish and the three-dimensional co-ordinate that is proximal to an edge of the head of the fish is identified as first three-dimensional co-ordinate. At step 606, a second three-dimensional co-ordinate corresponding to a rear edge of the at least one aquatic animal 108 is identified. The second three-dimensional co-ordinate may be identified by estimating a proximity of each of the three-dimensional co-ordinates with a rear edge of the aquatic animal 108. In an example, the rear edge corresponds to a tail of the fish and the three-dimensional co-ordinate that is proximal to an edge of the tail of the fish is identified as second three-dimensional co-ordinate. At step 608, a distance between the first three-dimensional co-ordinate and the second three-dimensional co-ordinate is calculated. In an example, the distance between the head of the fish and the tail of the fish is calculated using Euclidean geometry. At step 610, the longitudinal dimension of the at least one aquatic animal 108 is computed based on the calculated distance. In an example, the longitudinal dimension is calculated between the head of the fish and the tail of the fish.

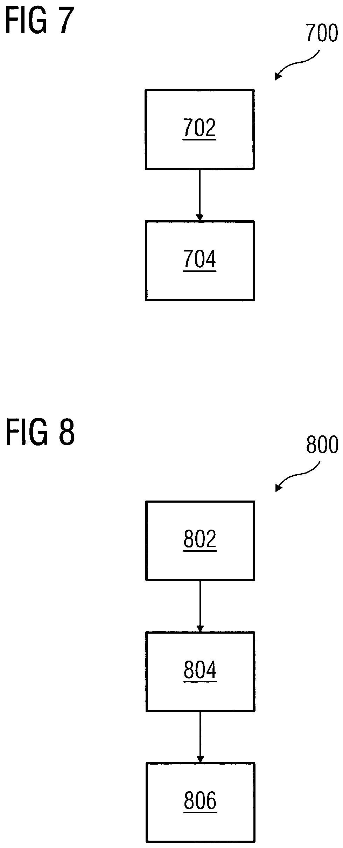

FIG 7 illustrates a flowchart depicting steps of a method 700 of monitoring a condition of the at least one aquatic animal 108 in the enclosed area 106 based on the determined weight of the at least one aquatic animal 108, in accordance with an embodiment of the present disclosure. In an embodiment, the weight of the aquatic animal 108 is closely related to an amount of the feed that is consumed by the aquatic animal. In another embodiment, the type of the aquatic animal 108 is also related to a composition of feed that is provided to the aquatic animal 108. At step 702, an amount of feed is determined to be provided to the at least one aquatic animal 108 based on the condition of the at least one aquatic animal 108. The condition of the aquatic animal 108 may also be associated with the weight of the aquatic animal 108 and an optimal growth of the aquatic animal 108. The amount of feed may be directly proportional to the weight of the aquatic animal 108. At step 704, the amount of feed is configured to be provided to the at least one aquatic animal 108 in a feed control device. In an example, the amount of feed is more for fishes having more weight as determined. In another example, the composition of the feed may also be determined based on the class or species of the aquatic animal 108.

FIG 8 illustrates a flowchart depicting steps of a method of monitoring a condition of the at least one aquatic animal in the enclosed area based on the determined weight of the at least one aquatic animal, in accordance with an embodiment of the present disclosure. At step 802, an amount of dissolved oxygen to be provided to the at least one aquatic animal 108 is determined based on the one or more parameters affecting the condition of the at least one aquatic animal 108. The one or more parameters may include a motion of the aquatic animals 108 or a physical activity of the aquatic animals 108 in the enclosed are 106. The amount of dissolved oxygen may also be directly proportional to the determined weight of the aquatic animal 108. At step 804, an amount of currently dissolved oxygen in water filled in the enclosed area is determined using one or more sensors 119A-N installed in the enclosed area 106. In particular, the oxygen monitoring sensor is configured to acquire an amount of dissolved oxygen in the enclosed area 106. At step 806, an amount of dissolved oxygen in water based on the determined amount of oxygen required for the least one aquatic animal 108 and the amount of oxygen currently dissolved in the water. The amount of oxygen dissolved in water is compared with a threshold value. The threshold value is an optimal value of dissolved oxygen that must be present in the water for survival and optimal growth of the aquatic animals 108. If the amount of currently dissolved oxygen is below a threshold value, the controller 116 is configured to increase an inflow of oxygen into the enclosed area 106.

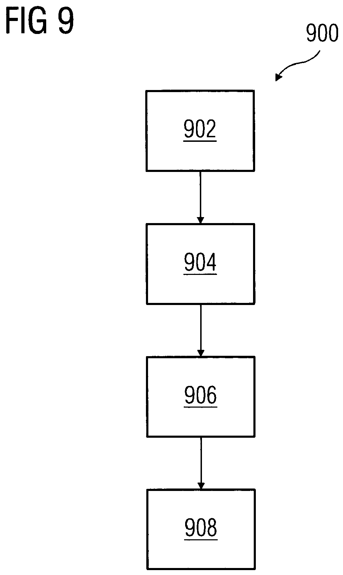

FIG 9 illustrates a flowchart depicting steps of a method 900 of providing a quantity of a given type of aquatic animal 108 from the enclosed area, in accordance with an embodiment of the present disclosure. At step 902, a request to provide a quantity of a given type of aquatic animal 108 from the enclosed area 106 is received. The request may be raised by a user from the user device 120 specifying the type of the aquatic animal 108 and a quantity of the aquatic animal 108. For example, the user may request to provide 5 kilograms of salmon from the enclosed area 106. At step 904, one or more aquatic animals 108 belonging to the given type are determined using the second machine leaning algorithm. In an example, once a request is received for providing salmon fish, one or more images are acquired from the enclosed area 106. The images are classified to identify salmon fishes in the enclosed area 106. At step 906, a group of aquatic animals 108 is determined from the determined one or more aquatic animals 108 based on the determined weight of each of the one or more aquatic animals 108. The collective weight of the group of aquatic animals 108 is equal to the quantity specified in the received request. In an example, the enclosed area 106 may comprise a number of salmon fishes having varied weights. Therefore, a group of salmon fishes are determined from a number of fishes in the enclosed area 106. The group of salmon fishes is determined based on the weight of the salmon fishes. In particular, the total weight of the group of salmon fishes is equal to the weight specified in the request i.e. 2 kilograms. At step 908, the group of aquatic animals 108 are captured using a radio frequency identification sensor associated with each of the aquatic animals 108. In an example, the aquatic animals 108 may be tagged a radio frequency identification sensor, wherein the radio frequency identification (RFID) sensor that is configured to track the at least one aquatic animal 108 in the enclosed area 106. In an example, a robotic arm may be controlled to catch the fishes from the enclosed area 106 from the group of aquatic animals 108. For example, three salmon fishes with weight as 1 kilograms, 0.5 kilograms and 0.5 kilograms may be captured from the enclosed area based on their RFIDs. Further, the captured fishes may be provided to the user in an automated manner.

An advantage of the invention is that the weight of the aquatic animal 108 is determined based on key point detection. The key point detection is performed in a manner such that all the key points lie in same plane. The coplanarity check ensures that the computation of the longitudinal dimension is of high accuracy. Furthermore, the present invention discloses systems and methods capable of determining length and weight of the aquatic animals 108 without determining a three-dimensional model of the aquatic animals 108. Moreover, the weight determination of the aquatic animals 108 further aid in monitoring a condition of the aquatic animals 108 in the enclosed area 106. Yet another advantage of the invention is that the invention does not require external reference objects for determination of distance from the cameras, lighting equipment, or any other apparatus for biomass determination of the aquatic animals 108, thereby reducing the bulkiness and power consumption of the system. Furthermore, the classification of the aquatic animals 108 ensure a streamlined management of resources in the aquaculture set-up 100.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

### List of reference numbers:

- 100: Aquaculture set-up
- 102: Cloud platform
- 104: One or more image acquisition devices
- 106: Enclosed area
- 108: Aquatic animal
- 110: Aquaculture management module
- 112: Database
- 114: Network interface
- 116: Controller
- 118A-N: Life support devices
- 119A-N: One or more sensors
- 120: User device
- 201: Processing unit
- 202: Memory
- 203: Storage unit
- 204: Input unit
- 205: Output unit
- 207: Bus
- 300: Method of determining biomass of at least one aquatic animal
- 400: Image of the at least one aquatic animal
- 500: Flowchart depicting classification of the at least one aquatic animal using the third trained machine learning model
- 600: Method of computing the longitudinal dimension of the at least one aquatic animal based on the detected set of key points
- 700: Method of monitoring a condition of the at least one aquatic animal in the enclosed area based on the determined weight of the at least one aquatic animal
- 800: Method of monitoring a condition of the at least one aquatic animal in the enclosed area based on the determined weight of the at least one aquatic animal
- 900: Method of providing a quantity of a given type of aquatic animal from the enclosed area

## Claims

1. A method of determining biomass of at least one aquatic animal (108), the method comprising:
receiving one or more images of the at least one aquatic animal (108) in an enclosed area (106) from one or more image acquisition devices (104);
extracting one or more features corresponding to the at least one aquatic animal (108) from the received one or more images;
detecting a presence of the at least one aquatic animal (108) based on the extracted one or more features;
detecting a set of key points based on the determined features corresponding to the detected at least one aquatic animal (108) using a first trained machine leaning algorithm, wherein the set of key points are detected on a boundary of the aquatic animal (108);
computing a longitudinal dimension of the at least one aquatic animal (108) based on the detected set of key points; and
determining a weight of the at least one aquatic animal (108) based on the determined longitudinal dimension using a second trained machine learning model.

2. The method according to claim 1, further comprising synchronously capturing the one or more images of the at least one aquatic animal (108) using the one or more image acquisition devices (104).

3. The method according to any of the preceding claims, further comprising determining a type of the at least one aquatic animal (108) from the one or more extracted features corresponding to the at least one aquatic animal (108) using the first trained machine learning algorithm (504).

4. The method according to any of the preceding claims, further comprising monitoring a condition of the at least one aquatic animal (108) in the enclosed area (106) based on the determined weight of the at least one aquatic animal (108).

5. The method according to claim 4 further comprising determining one or more parameters affecting the condition of the at least one aquatic animal (108) in the enclosed area (106) .

6. The method according to claim 5, further comprising:
determining an amount of feed to be provided to the at least one aquatic animal (108) based on the one or more parameters affecting the condition of the at least one aquatic animal (108); and
configuring the amount of feed to be provided to the at least one aquatic animal (108) in a feed control device.

7. The method according to claim 5 or 6, further comprising:
determining an amount of dissolved oxygen to be provided to the at least one aquatic animal (108) based on the one or more parameters affecting the condition of the at least one aquatic animal (108);
determining an amount of currently dissolved oxygen in water filled in the enclosed area using one or more sensors (119A-B) installed in the enclosed area (106); and
controlling an amount of dissolved oxygen in water based on the determined amount of oxygen to be provided to the at least one aquatic animal (108) and the determined amount of oxygen currently dissolved in the water.

8. The method according to any of the preceding claims, further comprising:
receiving a request to provide a quantity of a given type of aquatic animal (108) from the enclosed area (106);
determining one or more aquatic animals (108) belonging to the given type using the second machine leaning algorithm (504);
determining a group of aquatic animals (108) from the determined one or more aquatic animals (108) based on the determined weight of each of the one or more aquatic animals (108), wherein collective weight of the group of aquatic animals (108) is equal to the quantity specified in the received request; and
capturing the group of aquatic animals (108) using a radio frequency identification sensor associated with each of the aquatic animals (108).

9. The method according to any of the preceding claims, wherein detecting the set of key points comprises detecting the set of key points in each of the one or more images of the at least one aquatic animal (108) in such a manner that the key points lie on a same plane, and/or
wherein detecting the set of key points on each of the received images comprises determining a pair of corresponding images pertaining to each of the at least one aquatic animal (108), wherein the pair of corresponding images overlap with each other.

10. The method according to any of the preceding claims, wherein computing the longitudinal dimension of the at least one aquatic animal (108) based on the detected set of key points comprises:
transforming the detected set of key points to corresponding three-dimensional co-ordinates;
identifying a first three-dimensional co-ordinate corresponding to a front edge of the at least one aquatic animal (108);
identifying a second three-dimensional co-ordinate corresponding to a rear edge of the at least one aquatic animal (108);
calculating a distance between the first three-dimensional co-ordinate and the second three-dimensional co-ordinate; and
computing the longitudinal dimension of the at least one aquatic animal (108) based on the calculated distance.

11. An apparatus comprising:
one or more processing units (2010); and
a memory (202) communicatively coupled to the one or more processing units (201), the memory (202) comprising an aquaculture management module (110) configured to perform the method steps as claimed in claims 1 to 10.

12. A system of determining biomass of at least one aquatic animal (108), the system comprising:
one or more image acquisition devices (104) configured to capture one or more images of the at least one aquatic animal (108) in an enclosed area (108);
one or more processing units (201); and
a memory (202) communicatively coupled to the one or more processing units (201), the memory (202) comprising an aquaculture management module (110) configured to perform the method steps as claimed in claims 1 to 10.

13. A system for determining biomass of at least one aquatic animal (108), the system comprising:
one or more servers remotely located from an enclosed area (106);
one or more image acquisition devices (104) communicatively coupled to the one or more servers; and
one or more user devices (120) communicatively coupled to the one or more servers, wherein the one or more servers comprise computer readable instructions, which when executed by the one or more servers cause the one or more servers to perform the method according to claims 1 to 10.

14. A computer program product comprising machine readable instructions, that when executed by a processing unit (201), cause the processing unit (201) to perform a method according to claims 1 to 10.

15. A computer readable medium on which program code sections of a computer program are saved, the program code sections being loadable into and/or executable in a system to make the system execute the method of any one of the claims 1 to 10 when the program code sections are executed in the system.
